# EUROPÄISCHE PATENTANMELDUNG

(11) **EP 3 756 930 A1**
(43) Veröffentlichungstag der Anmeldung: **30.12.2020**
(21) Anmeldenummer: 20180289.9
(22) Anmeldetag: 16.06.2020
(51) Int. Cl.: B60L 50/51, H02M 1/44, H02M 7/00

(54) **STROMRICHTER, ANORDNUNG MIT EINER ELEKTRISCHEN MASCHINE UND EINEM STROMRICHTER SOWIE FAHRZEUG**

(30) Priorität: 28.06.2019 DE 102019117594
(71) Anmelder: Valeo Siemens eAutomotive Germany GmbH, 91056 Erlangen (DE)
(72) Erfinder: RASEK, Guido, 91301 Forchheim (DE); REYMANN, Markus, 90451 Nürnberg (DE)
(74) Vertreter: Dr. Gassner & Partner mbB

(57) **Zusammenfassung**

Stromrichter (1), umfassend ein Gehäuse (2) und eine Stromschienenanordnung (5), die innerhalb des Gehäuses angeordnet ist (2), wobei der Stromrichter (1) dazu eingerichtet ist, einen Wechselstrom entlang der Stromschienenanordnung (5) zu führen, wobei der Stromrichter (1) ferner wenigstens ein plattenförmiges Flussleitelement (19, 20) aus einem magnetisch hochpermeablen Material umfasst, das zwischen einer Wand (13a, 14a) des Gehäuses (2) und der Stromschienenanordnung (5) angeordnet ist.

## Beschreibung

Die vorliegende Erfindung betrifft einen Stromrichter, umfassend ein Gehäuse und eine Stromschienenanordnung, die innerhalb des Gehäuses angeordnet ist, wobei der Stromrichter dazu eingerichtet ist, einen Wechselstrom entlang der Stromschienenanordnung zu führen.

Daneben betrifft die Erfindung eine Anordnung mit einer elektrischen Maschine und einem Stromrichter sowie ein Fahrzeug.

In Stromrichtern wird ein ein- oder ausgangsseitiger Wechselstrom häufig über eine Stromschienenanordnung geführt. Die Stromschienenanordnung kann dabei im Betrieb magnetische Wechselfelder abstrahlen, deren magnetische Flussdichte außerhalb eines Gehäuses des Stromrichters entsprechend vorgegebener Richtlinien zur elektromagnetischen Verträglichkeit, beispielsweise der ICNIRP (International Commission on Non-Ionizing Radiation Protection), auf zulässige Werte zu begrenzen ist. Dadurch sollen Menschen in der Umgebung des Stromrichters vor nicht-ionisierenden Abstrahlungen geschützt werden. Insbesondere im Hinblick auf eine Verwendung des Stromrichters in einem Elektrofahrzeug kann sich der Stromrichter in der Nähe von Fahrzeuginsassen befinden, sodass vorgegebene Grenzwerte zum Schutz der Fahrzeuginsassen einzuhalten sind. Die Richtlinien weisen typischerweise Vorgaben zur Begrenzung der magnetischen Wechselfelder für bestimmte Frequenzbereiche auf, unter anderem für einen Frequenzbereich unterhalb von 1 kHz.

Es sind verschiedene Ansätze zur Begrenzung magnetischer Felder bekannt. So kann das Gehäuse aus einem hochpermeablen Material gebildet werden, was jedoch teuer ist und ein hohes Gewicht des Stromrichters nach sich zieht. Eine Vergrößerung eines Abstands zwischen den Fahrzeuginsassen und dem Stromrichter oder die Verwendung dicker Umhüllungen des Gehäuses, um signifikant hohe Wirbelströme zu erzeugen, scheitert häufig an Bauraumbeschränkungen im Fahrzeug. Es ist auch denkbar, die Form der Stromschienenanordnung im Hinblick auf eine Verringerung der Abstrahlung magnetischer Felder zu optimieren, was jedoch die Freiheitsgrade bei der Führung der Stromschienenanordnung im Gehäuse einschränkt. Es ist ferner bekannt, das Gehäuse aus einem Sandwichmaterial, beispielsweise aus einer Aluminiumschicht und einer darauf plattierten ferromagnetischen Schicht, zu bilden, was jedoch wiederum hohe Kosten verursacht.

Der Erfindung liegt mithin die Aufgabe zugrunde, eine Möglichkeit zur Verbesserung der elektromagnetischen Verträglichkeit bei einem Stromrichter anzugeben, die insbesondere im Hinblick auf die Kosten und das Gewicht des Stromrichters aufwandsarm realisierbar ist und geringe elektrische Verluste erzeugt.

Zur Lösung dieser Aufgabe ist bei einem Stromrichter der eingangs genannten Art erfindungsgemäß vorgesehen, dass dieser wenigstens ein plattenförmiges Flussleitelement aus einem magnetisch hochpermeablen Material umfasst, dass zwischen einer Wand des Gehäuses und der Stromschienenanordnung angeordnet ist.

Die Erfindung beruht auf der Überlegung, die elektromagnetische Verträglichkeit des Stromrichters im Hinblick auf die Abstrahlung magnetischer Wechselfelder, insbesondere in einem Frequenzbereich unter 1 kHz, durch das Einbringen des wenigstens einen plattenförmiges Flussleitelements zwischen der Wand des Gehäuses und der Stromschienenanordnung zu verbessern und so eine Abschirmung nicht über das gesamte Gehäuse, sondern lediglich ortsspezifisch für besonders stark abstrahlende Bereiche des Gehäuses zu realisieren.

Ein solches plattenförmiges Flussleitelement kann vorteilhafterweise kostengünstig hergestellt werden, führt nur zu einer geringen Erhöhung des Gewichts und kann hinsichtlich seiner zweidimensionalen Form passgenau an seinen Anbringungsort angepasst werden. Dies erlaubt es auch, das Flussleitelement im Rahmen eines Designprozesses des Stromrichters verhältnismäßig spät hinzuzufügen und flexibel an Änderungen in Normen oder regionalen Unterschieden hinsichtlich der Vorgaben zur elektromagnetischen Verträglichkeit anzupassen. Das plattenförmige Flussleitelement hat ferner den Vorteil, dass es nur geringe elektrische Verluste verursacht, weil Hysterese- und Wirbelstromverluste im Flussleitelement im Wesentlichen von einer magnetischen Flussdichte im Flussleitelement und seinem Volumen abhängen. Letzteres ist vorteilhafterweise aufgrund der plattenförmigen Ausgestaltung gering.

Der Stromrichter ist bevorzugt als Wechselrichter ausgebildet. Das Gehäuse ist in der Regel aus einem niederpermeablen Material, beispielsweise Aluminium oder einer Aluminiumlegierung, gebildet. Unter "niederpermeabel" ist im Sinne dieser Erfindung insbesondere eine Permeabilitätszahl nahe 1, insbesondere zwischen 0,9 und 1,1, zu verstehen. Unter "hochpermeabel" ist im Sinne dieser Erfindung insbesondere eine Permeabilitätszahl von wenigstens 50, bevorzugt wenigstens 100, besonders bevorzugt wenigstens 1000, zu verstehen. Die Wand kann einen Deckel oder eine andere Innenseite des Gehäuses ausbilden. Allgemein kann vorgesehen sein, dass das oder ein Flussleitelement auf der Wand selbst oder auf einer anderen Komponente des Stromrichters zwischen der Wand und der Stromschienenanordnung angeordnet ist.

Das Flussleitelement ist vorteilhafterweise aus einem ferromagnetischen oder ferrimagnetischen Material gebildet. Das Flussleitelement kann aus einem Weicheisenmaterial, wie es beispielsweise im Transformatorenbau zum Einsatz kommt, gebildet sein. Das Flussleitelement weist in der Regel eine Dicke von höchstens 4 mm, bevorzugt höchstens 2 mm, besonders bevorzugt höchstens 1,2 mm, und/oder wenigstens 0,05 mm, bevorzugt wenigstens 0,1 mm, besonders bevorzugt wenigstens 0,5 mm, auf.

Die Stromschienenanordnung kann eine Stromschiene oder mehrere Stromschienen aufweisen. Die Stromschienen können mehrere Stromschienengruppen bilden.

Bei dem erfindungsgemäßen Stromrichter kann vorgesehen sein, dass das Flussleitelement aus einem Metallblech gebildet ist. Solche Metallbleche sind leicht verfügbar und kostengünstig. Alternativ kann vorgesehen sein, dass das Flussleitelement aus einer Ferritplatte gebildet ist.

In einer vorteilhaften Ausgestaltung des erfindungsgemäßen Stromrichters ist vorgesehen, dass das Gehäuse ein erstes Gehäuseelement und ein aus einem magnetisch niederpermeablen Material gebildetes Abdeckelement, das innerhalb des ersten Gehäuseelements angeordnet ist, aufweist, wobei ein Flussleitelement auf dem Abdeckelement zwischen der durch das erste Gehäuseelement ausgebildeten Wand und der Stromschienenanordnung angeordnet ist. Die lokale Erhöhung der Permeabilität durch das Flussleitelement ist besonders bei dem niederpermeablen Abdeckelement zweckmäßig, da im Abdeckelement typischerweise nur verhältnismäßig geringe Wirbelströme induziert werden und somit nur eine geringe Abschirmwirkung für magnetische Felder im interessierenden Frequenzbereich gegeben ist. Das Abdeckelement ist bevorzugt plattenförmig ausgebildet und/oder aus Aluminium gebildet.

Das Flussleitelement kann auf dem Abdeckelement, beispielsweise durch Verkleben und/oder Verschweißen und/oder durch ein Befestigungselement, wie eine Schraube oder einen Niet, befestigt sein. Es ist auch möglich, dass das Flussleitelement in das Abdeckelement eingearbeitet ist, beispielsweise durch Verschmelzen und/oder Walzen und/oder Sintern und/oder Plattieren.

Es kann ferner vorgesehen sein, dass die Stromschienenanordnung durch wenigstens eine Öffnung in einer zweiten Wand des ersten Gehäuseelements, die insbesondere senkrecht zur ersten Wand verläuft, aus dem ersten Gehäuseelement herausgeführt ist und das Flussleitelement auf einem öffnungsseitigen Randabschnitt des Abdeckelements angeordnet ist. Ein solcher Bereich wurde messtechnisch als besonders kritisch im Hinblick auf die Abstrahlung magnetischer Wechselfelder durch die erste Wand im interessierenden Frequenzbereich identifiziert, sodass die Anbringung des Flussleitelements im öffnungsseitigen Randabschnitt einen besonders hohen Beitrag zur Verbesserung der elektromagnetischen Verträglichkeit leistet. Es können mehrere Öffnungen vorgesehen sein, wobei durch eine jeweilige Öffnung eine Stromschienengruppe der Stromschienenanordnung durchgeführt ist.

In vorteilhafter Weiterbildung ist vorgesehen, dass das Abdeckelement zur wenigstens einen Öffnung weisende Vorsprünge aufweist und sich das Flussleitelement über die Vorsprünge erstreckt. Durch die Verlängerung des Abdeckelements mittels der Vorsprünge bis nahe an die die Öffnung aufweisende zweite Wand kann die Abschirmwirkung räumlich weit ausgedehnt werden. Typischerweise entspricht die Form des Flussleitelements im Wesentlichen der Form der Vorsprünge. Das Flussleitelement erstreckt sich bevorzugt nicht über Bereiche, die parallel zu Zwischenräumen zwischen den Vorsprüngen liegen.

Um einen zusätzlichen Abschirmeffekt durch in das Abdeckelement induzierte Wirbelströme zu erzielen, wird es bevorzugt, wenn das Abdeckelement in einem Abschnitt, auf dem das Flussleitelement angeordnet ist, eine größere Dicke als in übrigen Abschnitten aufweist. Die größere Dicke kann durch eine Erhebung des Abdeckelements auf seiner der Stromschienenanordnung zugewandten oder abgewandten Seite realisiert sein.

Es ist ferner von Vorteil, wenn das Abdeckelement eine Eintiefung aufweist, in welcher des Flussleitelements angeordnet ist. Dies erleichtert die Befestigung des Flussleitelements. Die Eintiefung weist bevorzugt eine Tiefe von höchstens dem 1,5-fachen, besonders bevorzugt höchstens dem 1,1-fachen, der Dicke des in ihr angeordneten Flussleitelements auf.

Das erste Gehäuseelement haust typischerweise eine Leistungselektronik des Stromrichters ein, welche dazu eingerichtet ist, eingangsseitig den Wechselstrom zu erhalten oder ausgangsseitig den Wechselstrom bereitzustellen.

Bei dem erfindungsgemäßen Stromrichter ist bevorzugt ferner vorgesehen, dass das Gehäuse ein zweites Gehäuseelement mit wenigstens einer Öffnung, durch welche die Stromschienenanordnung in das zweite Gehäuseelement geführt ist, aufweist, wobei ein Flussleitelement zwischen der durch das zweite Gehäuseelement ausgebildeten Wand, die senkrecht zu einer die wenigstens eine Öffnung aufweisenden zweiten Wand verläuft, und der Stromschienenanordnung angeordnet ist. Messtechnisch hat sich die erste Wand des zweiten Gehäuseelements ebenfalls als stark abstrahlender Bereich des Stromrichters erwiesen. Daher kann auch in solchen Bereichen durch das Flussleitelement eine Verbesserung der elektromagnetischen Verträglichkeit erzielt werden. Es können mehrere Öffnungen vorgesehen sein, wobei durch eine jeweilige Öffnung eine Stromschienengruppe der Stromschienenanordnung durchgeführt ist.

Allgemein kann das zuvor beschriebene, auf dem Abdeckelement angeordnete Flussleitelement auch als erstes Flussleitelement und das zwischen der ersten Wand des zweiten Gehäuseelements und der Stromschienenanordnung angeordnete Flussleitelement auch als zweites Flussleitelement bezeichnet werden.

Bevorzugt ist das Flussleitelement auf der ersten Wand angeordnet. Dazu weist die erste Wand zweckmäßigerweise einen Einschub auf, in welchen das Flussleitelement eingelegt ist. Das Flussleitelement kann auf der ersten Wand, beispielsweise durch Verkleben und/oder Verschweißen und/oder durch ein Befestigungselement, wie eine Schraube oder einen Niet, befestigt sein. Es ist auch möglich, dass das Flussleitelement in die erste Wand eingearbeitet ist, beispielsweise durch Verschmelzen und/oder Walzen und/oder Sintern und/oder Plattieren.

Besonders bevorzugt ist vorgesehen, dass die Gehäuseelemente derart aneinander angeordnet sind, dass die Stromschienenanordnung durch eine jeweilige Öffnung vom ersten Gehäuseelement in das zweite Gehäuseelement geführt ist. Durch die Flussleitelemente kann so ein besonders von der Abstrahlung der magnetischen Wechselfelder betroffene Grenzbereich zwischen den Gehäuseelementen effektiv hinsichtlich seiner elektromagnetischen Verträglichkeit verbessert werden. Typischerweise sind die zweite Wand des ersten Gehäuseelements und die zweite Wand des zweiten Gehäuseelements, also die jeweils die Öffnung aufweisenden Wände, mehrstückig ausgebildet und/oder durch ein Befestigungselement aneinander befestigt. Gemäß einer besonders bevorzugten Ausgestaltung ragt ein die wenigstens eine Öffnung des zweiten Gehäuseelements begrenzender Abschnitt der zweiten des zweiten Gehäuseelements in die wenigstens Öffnung des ersten Gehäuseelements hinein.

Bei einer speziellen Ausgestaltung des Stromrichters ist vorgesehen, dass die Flussleitelemente durch eine einstückige, die Öffnungen durchsetzende Flussleitvorrichtung ausgebildet ist. Die Flussleitvorrichtung ist typischerweise vollständig plattenförmig. Sämtliche Ausführungen zur Beschaffenheit eines einzelnen Flussleitelements lassen sich auf die Flussleitvorrichtung übertragen.

Das zweite Gehäuseelement haust typischerweise eine Anschlussvorrichtung zum Anschließen der Stromschienenanordnung an eine elektrische Maschine ein. Das zweite Gehäuseelement kann insofern auch als Terminalbox, Anschlussbox oder Klemmenkasten aufgefasst bzw. bezeichnet werden.

Die der Erfindung zugrunde liegende Aufgabe wird ferner gelöst durch eine Anordnung mit einer elektrischen Maschine und einem erfindungsgemäßen Stromrichter, wobei der Stromrichter dazu eingerichtet ist, den Wechselstrom zur Erzeugung eines Drehfelds der elektrischen Maschine bereitzustellen.

Die der Erfindung zugrunde liegende Aufgabe wird ferner gelöst durch ein Fahrzeug, umfassend eine erfindungsgemäße Anordnung, wobei die elektrische Maschine zum Antreiben des Fahrzeugs eingerichtet ist.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1: eine Prinzipdarstellung eines ersten Ausführungsbeispiels des erfindungsgemäßen Stromrichters;
- Fig. 2: eine perspektivische Prinzipdarstellung des ersten Ausführungsbeispiels;
- Fig. 3: eine perspektivische Prinzipdarstellung im Bereich eines zweiten Gehäuseelements des ersten Ausführungsbeispiels;
- Fig. 4: eine geschnittene Detaildarstellung eines zweiten Ausführungsbeispiels im Bereich eines ersten Gehäuseelements;
- Fig. 5: eine perspektivische Prinzipdarstellung eines dritten Ausführungsbeispiels des erfindungsgemäßen Stromrichters;
- Fig. 6: eine perspektivische Prinzipdarstellung eines vierten Ausführungsbeispiels des erfindungsgemäßen Stromrichters;
- Fig. 7: eine geschnittene Prinzipdarstellung eines fünften Ausführungsbeispiels des erfindungsgemäßen Stromrichters;
- Fig. 8: eine perspektivische Prinzipdarstellung eines sechsten Ausführungsbeispiels des erfindungsgemäßen Stromrichters; und
- Fig. 9: eine Prinzipdarstellung eines Ausführungsbeispiels eines erfindungsgemäßen Fahrzeugs mit einer erfindungsgemäßen Anordnung.

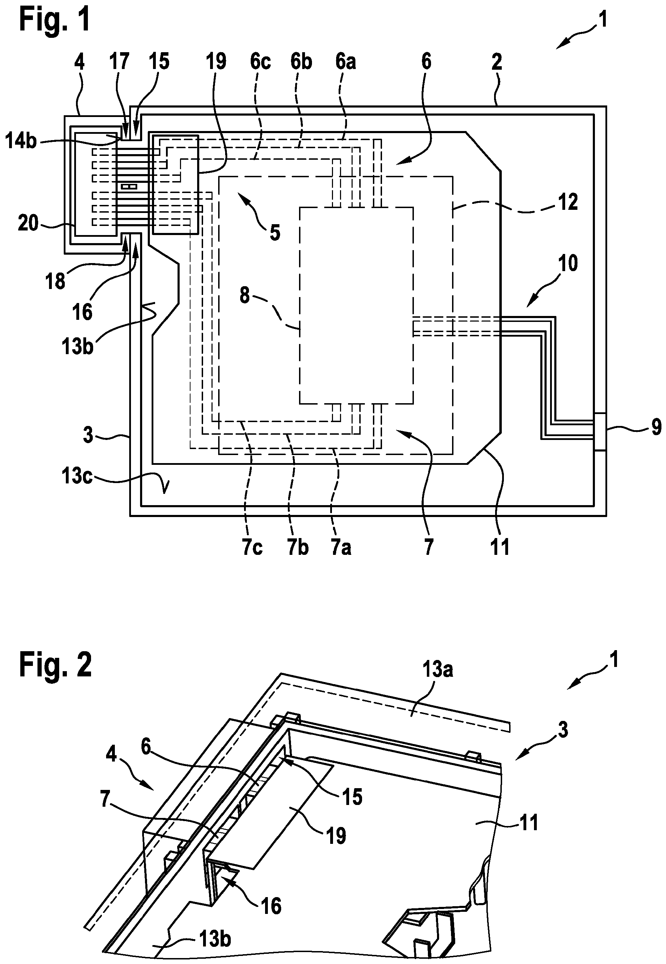

Fig. 1 eine Prinzipdarstellung eines ersten Ausführungsbeispiels eines Stromrichters 1.

Der Stromrichter 1 umfasst ein Gehäuse 2, welches ein erstes Gehäuseelement 3 und ein zweites Gehäuseelement 4 aufweist. Das Gehäuse 2 ist zur Gewichtsersparnis des Stromrichters 1 aus einem niederpermeablen Material, vorliegend Aluminium oder einer Aluminiumlegierung, gebildet. Des Weiteren umfasst der Stromrichter 1 eine Stromschienenanordnung 5, die zwei Stromschienengruppen 6, 7 mit je drei Stromschienen 6a, 6b, 6c bzw. 7a, 7b, 7c umfasst. Die Stromschienenanordnung 5 ist ausgangsseitig mit einer Leistungselektronik 8 des als Wechselrichter ausgebildeten Stromrichters 1 verbunden, wobei jede Stromschienengruppe 6, 7 einen dreiphasigen Wechselstrom führt. Daneben weist der Stromrichter 1 einen Gleichspannungsanschluss 9 auf, der über weitere Stromschienen 10 mit einem Eingang der Leistungselektronik 8 verbunden ist.

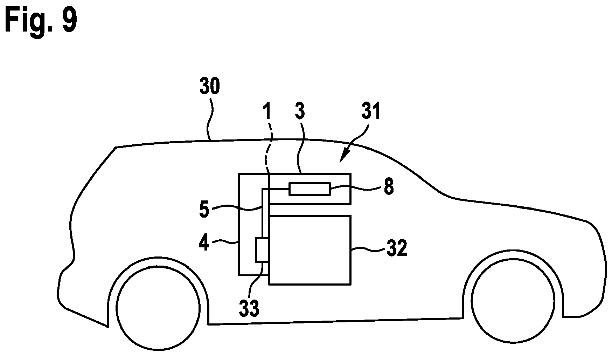

Die Leistungselektronik 8, der Gleichspannungsanschluss 9 und die Stromschienen 10 sind vollständig im ersten Gehäuseelement 3 eingehaust, welches außerdem ein Abdeckelement 11 und eine zwischen der Leistungselektronik 8 und dem Abdeckelement 11 angeordnete Leiterplatte 12 mit einer Steuerelektronik für die Leistungselektronik 8 einhaust. Das zweite Gehäuseelement 4 bildet hingegen eine Anschlussbox bzw. einen Klemmenkasten zur Verbindung einer elektrischen Maschine mit dem Stromrichter 1, wozu das zweite Gehäuseelement 4 eine Anschlussvorrichtung 33 (siehe Fig. 9) einhaust.

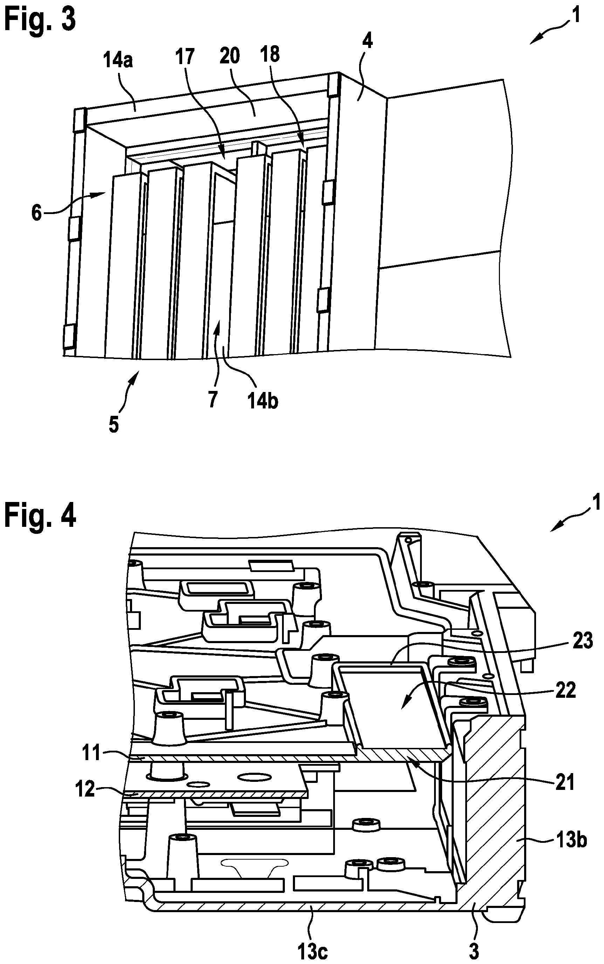

Das erste Gehäuseelement 3 weist eine erste Wand 13a (siehe Fig. 2), die einen Deckel des ersten Gehäuseelements 3 bildet, eine als Seitenwand ausgebildete zweite Wand 13b, weitere Seitenwände und eine einen Boden ausbildende dritte Wand 13c auf. Die Seitenwände erstrecken sich senkrecht von der dritten Wand 13c und bilden so ein durch die erste Wand 13a abgeschlossenes Aufnahmevolumen. Das zweite Gehäuseelement 4 weist eine erste Wand 14a (siehe Fig. 4), eine als Seitenwand ausgebildete zweite Wand 14b, weitere Seitenwände und eine der ersten Wand 14a gegenüberliegende dritte Wand (nicht gezeigt) auf.

Die Stromschienenanordnung 5 erstreckt sich von der Leistungselektronik 8 durch zwei in der zweiten Wand 13b des ersten Gehäuseelements 2 angeordnete Öffnungen 15, 16 und durch zwei in der zweiten Wand 14b des zweiten Gehäuseelements 4 ausgebildete Öffnungen 17, 18 in das zweite Gehäuseelement 4 hinein. Die erste Stromschienengruppe 6 erstreckt sich mithin durch die Öffnungen 15, 17 und die zweite Stromschienengruppe 7 durch die Öffnungen 16, 18. Innerhalb des zweiten Gehäuseelements 4 erstreckt sich die Stromschienenanordnung 5 in die Zeichenebene von Fig. 1 hinein.

Innerhalb des ersten Gehäuseelements 3 verläuft die Stromschienenanordnung 5 größtenteils zwischen der dritten Wand 13c und dem Abdeckelement 11. Auf dem Abdeckelement ist ein erstes Flussleitelement 19 zwischen der Stromschienenanordnung 5 und der ersten Wand 13a angeordnet. Das erste Flussleitelement befindet sich auf einem öffnungsseitigen Randabschnitt des Abdeckelements 11. Ein zweites Flussleitelement 20 ist auf der ersten Wand 14a des zweiten Gehäuseelements 4 zwischen diesem und der Stromschienenanordnung 5 angeordnet. Die Flussleitelemente 19, 20 sind jeweils plattenförmig mit einer Dicke von 1 mm und aus einem hochpermeablen Metallblech aus einem Weicheisenmaterial gebildet und dienen der Abschirmung magnetischer Wechselfelder in einem Frequenzbereich bis 1 kHz zur Verbesserung der elektromagnetischen Verträglichkeit des Stromrichters 1.

Fig. 2 ist eine perspektivische Prinzipdarstellung des Stromrichters 1 und zeigt die Anordnung des ersten Flussleitelements 19 auf dem Abdeckelement 11 und die erste Wand 13a des ersten Gehäuseelements 3 in einer nicht mit den Seitenwänden verbundenen Stellung. Das erste Flussleitelement 19 liegt auf dem im Wesentlichen ebenen Abdeckelement 11 auf.

Fig. 3 ist eine perspektivische Prinzipdarstellung des Stromrichters 1 im Bereich des zweiten Gehäuseelements 4.

Zu sehen ist der abgewinkelte Verlauf der Stromschienenanordnung 5 nach dem Durchdringen der Öffnungen 17, 18. Das zweite Flussleitelement 20 ist durch Einlegen in einen an der ersten Wand 14a ausgebildeten Einschub an dieser angeordnete und mit dieser verklebt oder verschweißt.

Im Folgenden werden weitere Ausführungsbeispiel Stromrichters 1 beschrieben, wobei gleiche oder gleichwirkende Komponenten mit identischen Bezugszeichen versehen sind. Soweit nichts Abweichendes beschrieben wird, entsprechen die weiteren Ausführungsbeispiele dem ersten Ausführungsbeispiel.

Fig. 4 ist eine geschnittene Detaildarstellung eines zweiten Ausführungsbeispiels eines Stromrichters 1 im Bereich des ersten Gehäuseelements 3 ohne die Stromschienenanordnung 5 und ohne das Flussleitelement 19.

Das Abdeckelement 11 weist in einem Abschnitt 21, auf dem das erste Flussleitelement 19 angeordnet ist, eine größere Dicke als in seinen übrigen Abschnitten auf. Dadurch können zur weiteren Erhöhung der Abschirmwirkung hinreichend große Wirbelströme im Abdeckelement 11 erzeugt werden.

Im Abschnitt 21 ist zudem auf der der Stromschienenanordnung 5 abgewandten Seite des Abdeckelements eine Eintiefung 22 ausgebildet, in welcher das Flussleitelement 19 angeordnet ist. Die Eintiefung ist wie das Flussleitelement 19 1 mm tief, sodass ein Rand 23 der Eintiefung bündig mit dem Flussleitelement 19 abschließt.

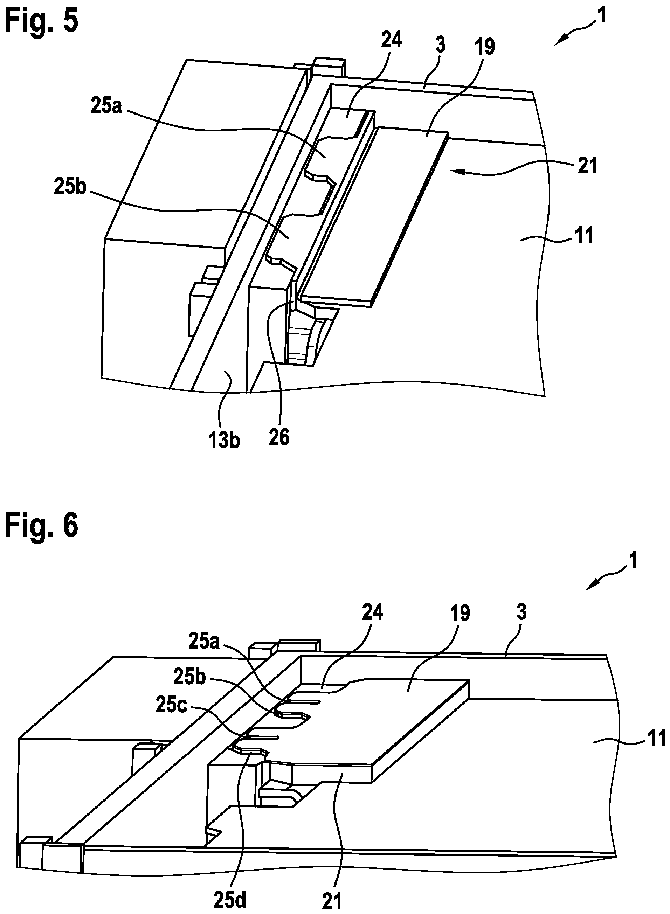

Fig. 5 ist eine perspektivische Prinzipdarstellung eines dritten Ausführungsbeispiels des Stromrichters 1. Beim dritten Ausführungsbeispiel weist das erste Gehäuseelement 3 an seiner zweiten Wand 13b einen die Öffnungen 15, 16 umgebenden rahmenartigen Vorsprung 24 auf. Das Abdeckelement 11 weist zu den Öffnungen 15, 16 weisende Vorsprünge 25a, 25b auf, die auf den Vorsprung 24 aufliegen und über einen Versprung 26 mit dem Abschnitt 21, auf dem das erste Flussleitelement 19 angeordnet ist, verbunden sind. Der Abschnitt 21 ist im zweiten Ausführungsbeispiel jedoch nicht aufgedickt.

Fig. 6 ist eine perspektivische Prinzipdarstellung eines vierten Ausführungsbeispiels des Stromrichters 1. Beim vierten Ausführungsbeispiel weist das erste Gehäuseelement 3 ebenfalls den Vorsprung 24 auf. Das Abdeckelement 11 weist vier Vorsprünge 25a bis 25d auf, welche zu den Öffnungen 15, 16 hin vom aufgedickten Abschnitt 21 abragen und auf dem Vorsprung 24 aufliegen. Das erste Flussleitelement 19 erstreckt sich hier auch über die Vorsprünge 25a bis 25d.

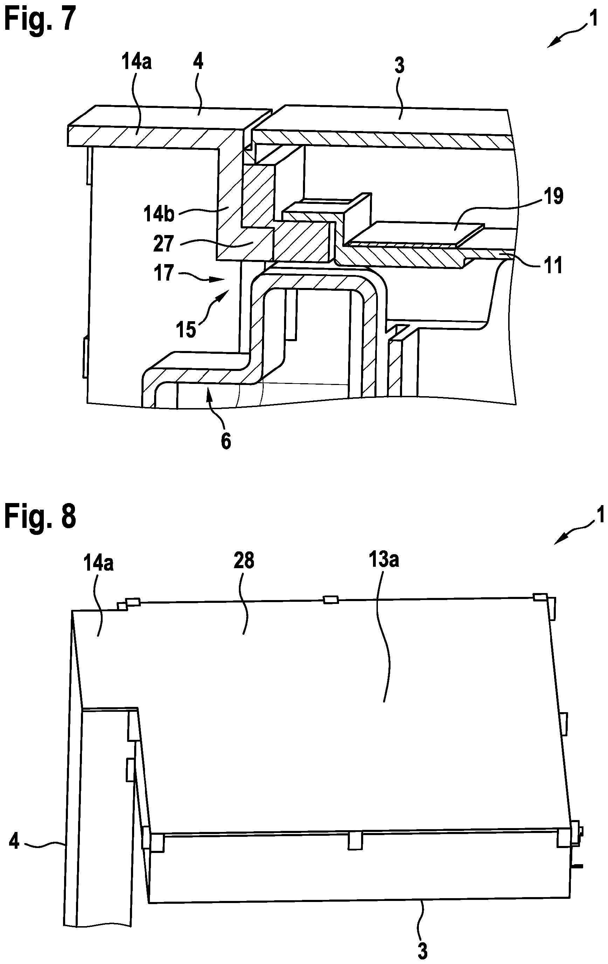

Fig. 7 ist eine geschnittene Prinzipdarstellung eines fünften Ausführungsbeispiels des Stromrichters 1. Beim fünften Ausführungsbeispiel ragt ein jeweiliger eine Öffnung 17, 18 begrenzender, kragenartiger Abschnitt 27 des zweiten Gehäuseelements 4 in die Öffnungen 15, 16 des ersten Gehäuseelements 3 hinein.

Fig. 8 ist eine perspektivische Prinzipdarstellung eines sechsten Ausführungsbeispiels des Stromrichters 1, bei dem die erste Wand 13a des ersten Gehäuseelements 3 und die erste Wand 14 a des zweiten Gehäuseelements 4 durch eine einstückiges Deckelelement 28 ausgebildet sind.

Gemäß einem siebten, nicht gezeigten Ausführungsbeispiel sind die Flussleitelemente 19, 20 durch eine einstückige, die Öffnungen 15 bis 18 durchsetzende Flussleitvorrichtung ausgebildet.

Die zuvor genannten Ausführungsbeispiele sind generell kombinierbar. Gemäß weiteren Ausführungsbeispielen kann ein oder ein jeweiliges Flussleitelement 19, 20 aus einer Ferritplatte gebildet sein. Bei weiteren Ausführungsbeispielen ist vorgesehen, dass ein oder ein jeweiliges Flussleitelement 19, 20 in das Abdeckelement 11 bzw. auf in die erste Wand 14a des zweiten Gehäuseelements 4 eingearbeitet ist, beispielsweise durch einen Schmelz-, Walz-, Sinter- oder Plattiervorgang, oder mittels Befestigungselementen, wie Schrauben oder Nieten, befestigt ist.

Fig. 9 ist eine Prinzipdarstellung eines Ausführungsbeispiels eines Fahrzeugs 30 mit einem Ausführungsbeispiel einer Anordnung 31. Diese umfasst eine elektrische Maschine 32, die zum Antreiben des Fahrzeugs 30 eingerichtet ist, und einen Stromrichter 1 gemäß einem der zuvor beschriebenen Ausführungsbeispiele. Der Stromrichter 1 ist dazu eingerichtet, den Wechselstrom zur Erzeugung eines Drehfelds der elektrischen Maschine 32 bereitzustellen. Gezeigt ist ferner die im zweiten Gehäuseelement 4 angeordnete Anschlussvorrichtung 33, mittels welcher die elektrische Maschine 32 über die Stromschienenanordnung 5 mit der Leistungselektronik 8 des Stromrichters 1 verbunden ist.

## Patentansprüche

1. Stromrichter (1), umfassend ein Gehäuse (2) und eine Stromschienenanordnung (5), die innerhalb des Gehäuses angeordnet ist (2), wobei der Stromrichter (1) dazu eingerichtet ist, einen Wechselstrom entlang der Stromschienenanordnung (5) zu führen,
**gekennzeichnet durch**
wenigstens ein plattenförmiges Flussleitelement (19, 20) aus einem magnetisch hochpermeablen Material, das zwischen einer Wand (13a, 14a) des Gehäuses (2) und der Stromschienenanordnung (5) angeordnet ist.

2. Stromrichter nach Anspruch 1, wobei
das Flussleitelement (19, 20) aus einem Metallblech oder einer Ferritplatte gebildet ist.

3. Stromrichter nach Anspruch 1 oder 2, wobei
das Gehäuse ein erstes Gehäuseelement (3) und ein aus einem magnetisch niederpermeablen Material gebildetes Abdeckelement (11), das innerhalb des ersten Gehäuseelements (3) angeordnet ist, aufweist, wobei ein Flussleitelement (19) auf dem Abdeckelement (11) zwischen der durch das erste Gehäuseelement ausgebildeten Wand (13a) und der Stromschienenanordnung (5) angeordnet ist.

4. Stromrichter nach Anspruch 3, wobei
die Stromschienenanordnung (5) durch wenigstens eine Öffnung (15, 16) in einer zweiten Wand (13b) des ersten Gehäuseelements (3) aus dem ersten Gehäuseelement (3) herausgeführt ist und das Flussleitelement (19) auf einem öffnungsseitigen Randabschnitt des Abdeckelements (11) angeordnet ist.

5. Stromrichter nach Anspruch 4, wobei
das Abdeckelement (11) zur wenigstens einen Öffnung (15, 16) weisende Vorsprünge (25a-25d) aufweist und sich das Flussleitelement (19) über die Vorsprünge (25a-25d) erstreckt.

6. Stromrichter nach einem der Ansprüche 3 bis 5, wobei das Abdeckelement (11) in einem Abschnitt (21), auf dem das Flussleitelement (19) angeordnet ist, eine größere Dicke als in übrigen Abschnitten aufweist.

7. Stromrichter nach einem der Ansprüche 3 bis 6, wobei das Abdeckelement (11) eine Eintiefung (22) aufweist, in welcher das Flussleitelement (19) angeordnet ist.

8. Stromrichter nach einem der Ansprüche 3 bis 7, wobei das erste Gehäuseelement (3) eine Leistungselektronik (8) des Stromrichters (1) einhaust, welche dazu eingerichtet ist, den Wechselstrom eingangsseitig zu erhalten oder ausgangsseitig bereitzustellen.

9. Stromrichter nach einem der vorhergehenden Ansprüche, wobei das Gehäuse (2) ein zweites Gehäuseelement (4) mit wenigstens einer Öffnung (17, 18), durch welche die Stromschienenanordnung (5) in das zweite Gehäuseelement (4) geführt ist, aufweist, wobei ein Flussleitelement (20) zwischen der durch das zweite Gehäuseelement (4) ausgebildeten Wand (14a), die senkrecht zu einer die wenigstens eine Öffnung (17, 18) aufweisenden zweiten Wand (14b) verläuft, und der Stromschienenanordnung (5) angeordnet ist.

10. Stromrichter nach Anspruch 9, wobei
das Flussleitelement (20) auf der ersten Wand (14a) angeordnet ist.

11. Stromrichter nach Anspruch 9 oder 10, wenn abhängig von Anspruch 4, wobei
die Gehäuseelemente (3, 4) derart aneinander angeordnet sind, dass die Stromschienenanordnung (5) durch eine jeweilige Öffnung (15-18) vom ersten Gehäuseelement (3) in das zweite Gehäuseelement (4) geführt ist.

12. Stromrichter nach Anspruch 11, wobei
die Flussleitelemente (19, 20) durch eine einstückige, die Öffnungen (15-18) durchsetzende Flussleitvorrichtung ausgebildet sind.

13. Stromrichter nach einem der Ansprüche 9 bis 12, wobei das zweite Gehäuseelement (4) eine Anschlussvorrichtung (33) zum Anschließen der Stromschienenanordnung (5) an eine elektrische Maschine (32) einhaust.

14. Anordnung (31) mit einer elektrischen Maschine (32) und einem Stromrichter (1) nach einem der vorhergehenden Ansprüche, wobei der Stromrichter (1) dazu eingerichtet ist, den Wechselstrom zur Erzeugung eines Drehfelds der elektrischen Maschine (32) bereitzustellen.

15. Fahrzeug (30), umfassend eine Anordnung (31) nach Anspruch 14, wobei die elektrische Maschine (32) zum Antreiben des Fahrzeugs (30) eingerichtet ist.
